# FASCICULE DE BREVET EUROPEEN

(11) **EP 3 056 037 B1**
(45) Date de publication et mention de la délivrance du brevet: **31.01.2018**
(21) Numéro de dépôt: 14796220.3
(22) Date de dépôt: 06.10.2014
(51) Int. Cl.: H04W 12/04, H04W 8/20, H04L 12/24, H04L 29/08, H04W 8/18, H04L 9/08

(54) **PROCÉDÉ DE PERSONNALISATION D'UN ÉLÉMENT SÉCURISÉ**
VERFAHREN ZUR PERSONALISIERUNG EINES SICHEREN ELEMENTS
METHOD FOR PERSONALIZING A SECURE ELEMENT

(30) Priorité: 07.10.2013 FR 1359690
(43) Date de publication de la demande: 17.08.2016
(73) Titulaire: Oberthur Technologies, 92700 Colombes (FR)
(72) Inventeur: MAZALI, Kaoutar, F-92700 Colombes (FR); LARIGNON, Guillaume, F-92700 Colombes (FR); DANREE, Arnaud, F-92700 Colombes (FR)
(74) Mandataire: Delumeau, François Guy
(86) Numéro de dépôt international: PCT/FR2014/052529
(87) Numéro de publication internationale: WO 2015/052422

(56) Documents cités:
- US-A1- 2011 136 482
- "Reprogrammable SIMs: Technology, Evolution and Implications Final Report", , 25 septembre 2012 (2012-09-25), pages 1-95, XP055126567, Extrait de l'Internet: URL:http://stakeholders.ofcom.org.uk/binar ies/research/telecoms-research/reprogramma ble-sims.pdf [extrait le 2014-07-02]
- PARK JAEMIN ET AL: "Secure Profile Provisioning Architecture for Embedded UICC", 2013 INTERNATIONAL CONFERENCE ON AVAILABILITY, RELIABILITY AND SECURITY, IEEE, 2 septembre 2013 (2013-09-02), pages 297-303, XP032524210, DOI: 10.1109/ARES.2013.40

## Description

### Arrière plan de l'invention

La présente invention se situe dans le domaine de la personnalisation d'éléments sécurisés, par exemple de carte à puces, et en particulier des cartes à puce intégrées de type eUICC (embedded Universal Integrated Circuit Cards).

De façon connue, les cartes SIM permettent à un opérateur, par exemple un opérateur de téléphonie cellulaire, de définir les services qu'il souhaite offrir à un client par un mécanisme dit de « personnalisation »

La personnalisation, généralement effectuée soit par l'opérateur, soit par un tiers pour le compte de l'opérateur, typiquement un fabricant de la carte consiste d'une façon générale à configurer la carte SIM avec un profil personnalisé comportant des données de personnalisation et éventuellement des programmes, par exemple des applets. Les cartes SIM peuvent aujourd'hui mémoriser plusieurs profils, ce qui n'était pas le cas à leur origine.

Les dimensions des cartes SIM amovibles rendent leur usage difficile dans des appareils de petite taille. Pour pallier à ce problème, l'ETSI (European Télécommunications Standards Institute) a défini un format soudé des cartes SIM (MFF2 : M2M Form Factor 2) et la GSMA a défini l'architecture logicielle des éléments sécurisés eUICC à savoir « de petite éléments matériels de confiance, qui peuvent être soudés dans les appareils mobiles, pour exécuter des applications SIM et permettre le changement sécurisé de l'identité de souscription ou de données de souscription » ainsi que la solution pour administrer ces éléments sécurisés eUICC.

La solution adoptée par la GSMA est de différer la personnalisation des eUICC jusqu'à ce que le terminal soit dans les mains de l'utilisateur final.

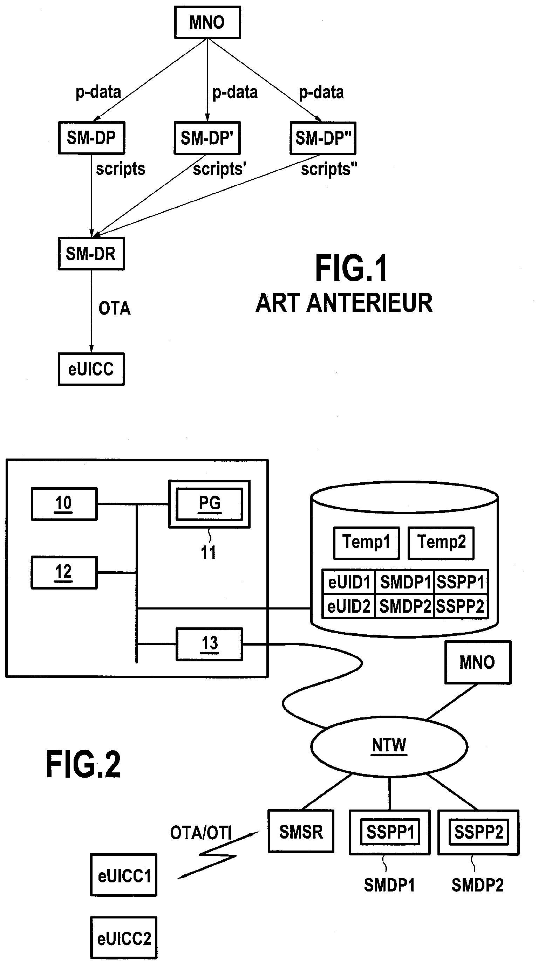

La figure 1 représente l'architecture proposée par la GSMA pour la personnalisation OTA (Over the Air). Elle repose en particulier sur des serveurs SM-DP (Subscription Management-Data Préparation) aptes à préparer des scripts de personnalisation exécutables par l'élément sécurisé eUICC lui-même. Ces scripts de personnalisation comportent une séquence de commandes, généralement des commandes APDU conforme à la norme ISO 7816-4 APDUs.

Le document "Reprogrammable SiMs : Technology, Evolution and Implications Final Report" du 25 septembre 2012, pp. 1-95 traite de la personnalisation des éléments SiM reprogrammables.

Toujours dans l'état actuel de la technique, les scripts de personnalisation préparés par les serveurs SM-DP sont livrés à l'élément sécurisé eUICC via un serveur de transport SM-SR "Subscription Management-Secure Routing" dans une session OTA (Over The Air).

Il faut noter que les scripts de personnalisation sont des scripts propriétaires si bien que l'opérateur de réseau MNO doit en pratique communiquer avec un serveur SM- DP différent pour chaque fabricant de la carte.

L'invention vise une méthode de personnalisation qui ne présente pas de tels inconvénients.

### Objet et résumé de l'invention

Ainsi, et selon un premier aspect, l'invention concerne un procédé de personnalisation d'un élément sécurisé conforme à la revendication 1.

Corrélativement, l'invention concerne aussi un serveur de personnalisation d'un élément sécurisé conforme à la revendication 10.

Ainsi, et de façon très avantageuse l'invention permet à l'opérateur de ne s'interfacer qu'avec le serveur de personnalisation conforme à l'invention, ce serveur étant apte à communiquer avec des serveurs de scripts de pré-personnalisation pour construire des scripts de personnalisation propriétaires, autrement dit propres à différents types de cartes.

En effet, l'invention propose de construire les scripts de personnalisation à partir :
- d'un script de pré-personnalisation qui contient tous les éléments spécifiques ou propriétaires, ces scripts étant délégués aux serveurs de scripts de pré-personnalisation ; et
- de données de personnalisation qui ne font pas référence à ces formats propriétaires.

Ainsi, au sens de l'invention, la personnalisation permet de transformer un profil de pré-personnalisation générique en un profil personnalisé lié à un contrat de service spécifique.

Autrement dit la pré-personnalisation créé sur la carte une interface de personnalisation qui comprend notamment un système de fichiers tel que défini par la norme ISO 7816-4§5, cette interface permettant de modifier le système de fichiers par l'utilisation de commandes normalisées telles que définies par la norme ISO 7816-4§6.
La personnalisation, qui s'effectue à travers cette interface, permet de transformer une carte générique en une carte spécifique au titulaire de la carte et au contrat qui lie ce titulaire à un fournisseur de service. Les données de personnalisation, telles que le nom du titulaire, les clés permettant l'accès à un service de téléphonie, un numéro de compte en banque, par exemple, seront écrites par l'utilisation de commandes ISO 7818-4§6.

De façon privilégiée mais non limitative, les serveurs de scripts de de pré-personnalisation utilisés dans l'invention peuvent être intégrés ou connectés à des serveurs SM-DP (Subscription Manager - Data Préparation) de l'état actuel de la technique définis dans le document : « Remote Provisioning Architecture for Embedded UICC - Version 1.43 - 1st July 2013.» de la GSMA ainsi que dans le document « Remote Provisioning Architecture for Embedded UICC - Technical Spécification - Draft 1.8 - 20th September 2013» de la GSMA.

Le serveur de script de prépersonnalisation peut être un nouveau processus du serveur SMDP de l'art antérieur.

On notera que ces serveurs SMDP de l'art antérieur sont aussi aptes à traiter la requête émise par l'opérateur. Ces serveurs sont :
- connectés à au moins un serveur d'opérateur ;
- aptes à recevoir des modèles ou des spécifications de profil d'un opérateur ;
- aptes à générer des scripts de personnalisation à partir de règles internes et à envoyer ces scripts à des serveurs de transport SM-SR.

Par conséquent, dans ce mode de réalisation l'invention ne modifie ni l'interface entre le serveur de l'opérateur et le serveur de personnalisation, ni l'interface entre le serveur de personnalisation et le serveur de transport SM-SR, ces interfaces étant définies dans le document « Remote Provisioning Architecture for Embedded UICC - Technical Spécification - Draft 1.8 - 20th September 2013» de la GSMA.

Dans un mode particulier de réalisation de l'invention dans lequel le serveur de personnalisation est apte à analyser et à modifier le script de pré-personnalisation, le script de personnalisation est généré en intégrant les données de personnalisation dans le script de pré-personnalisation.

Dans un autre mode de réalisation, le script de personnalisation est généré en concaténant lesdites données de personnalisation au script de pré-personnalisation reçu du serveur de script de pré-personnalisation sans modification du script de pré-personnalisation. Ce mode de réalisation est avantageux notamment lorsque le serveur de personnalisation ne sait pas interpréter ou ne peut pas modifier le script de pré-personnalisation.

Dans un mode particulier de réalisation, le script de pré-personnalisation et les données de personnalisation du script de personnalisation sont envoyés à l'élément sécurisé dans un même message.

En variante, le script de pré-personnalisation et les données de personnalisation du script de personnalisation peuvent être envoyées à l'élément sécurisé séparément, les données de personnalisation étant envoyées après réception d'un message confirmant la bonne exécution du script de pré-personnalisation dans l'élément sécurisé.

Dans un mode particulier de réalisation, le procédé de personnalisation selon l'invention comporte une étape d'envoi, à un serveur de transport, d'une requête pour générer un domaine sécurisé sur l'élément sécurisé dans lequel le profil personnalisé devra être installé.

Dans un mode particulier de réalisation, le procédé de personnalisation selon l'invention comporte :
- une étape d'obtention de clefs de chiffrement générées par l'élément sécurisé ; et
- une étape de chiffrement du script de personnalisation avec ces clefs.

Dans un mode particulier de réalisation du procédé de personnalisation selon l'invention, le script de personnalisation est envoyé à un serveur de transport apte à transmettre ce script à l'élément sécurisé via un canal OTA (Over the Air) ou OTI (Over the Internet).

Dans un mode particulier de réalisation, les différentes étapes du procédé de personnalisation sont déterminées par des instructions de programmes d'ordinateurs.

En conséquence, l'invention vise aussi un programme d'ordinateur sur un support d'informations, ce programme étant susceptible d'être mis en oeuvre par un ordinateur, ce programme comportant des instructions adaptées à la mise en oeuvre du procédé de personnalisation tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de l'invention apparaîtront à la lumière de la description qui suit, faite en référence aux dessins et aux annexes dans lesquels :
- la figure 1 déjà décrite représente l'architecture proposée par la GSMA pour la personnalisation OTA ;
- la figure 2 représente un serveur de personnalisation conforme à un mode particulier de réalisation de l'invention ;
- la figure 3 représente sous forme d'organigramme les principales étapes d'un procédé de personnalisation conforme à un mode particulier de réalisation de l'invention ;
- l'Annexe 1 fournit un exemple de données de personnalisation ;
- l'Annexe 2 fournit un exemple de modèle de profil ;
- l'Annexe 3 fournit un exemple de script de pré-personnalisation ; et
- les Annexes 4 et 5 fournissent deux exemples de script de personnalisation.

### Description détaillée d'un premier mode de réalisation

La figure 2 représente un serveur de personnalisation OTPM conforme à un mode particulier de réalisation de l'invention. Ce serveur OTPM est connecté au serveur MNO d'un opérateur de téléphonie, à un serveur SMSR de transport de profil et à deux serveurs SMDP1, SMDP2 de pré-personnalisation via un réseau de communication NTW. Chacun des serveurs SMDP1, SMDP2 se distingue des serveurs SM-DP de l'état de la technique en ce qu'il incorpore un serveur de script de pré-personnalisation SSPP1, SSPP2. Le serveur SMSR de transport est apte à communiquer avec un élément sécurisé eUICC1, eUICC2 à travers un canal OTA (Over The Air) ou OTI (Over The Internet).

Le serveur de personnalisation OTPM a l'architecture matérielle d'un ordinateur. Il comporte notamment un processeur 10, une mémoire morte de type ROM 11, une mémoire vive de type RAM 12, des moyens de communication 13 et une base de données 14.

Cette base de données 14 comporte :
- des modèles de profils Temp1, Temp2 prédéfinis avec l'opérateur MNO et décrits dans un langage structuré ;
- une table qui associe des serveurs de pré-personnalisation SMDP1, SMDP2 et des serveurs de script de pré-personnalisation SSDP1, SSDP2 aux identifiants eUID1, eUID2 d'éléments sécurisés eUICC1, eUICC2.

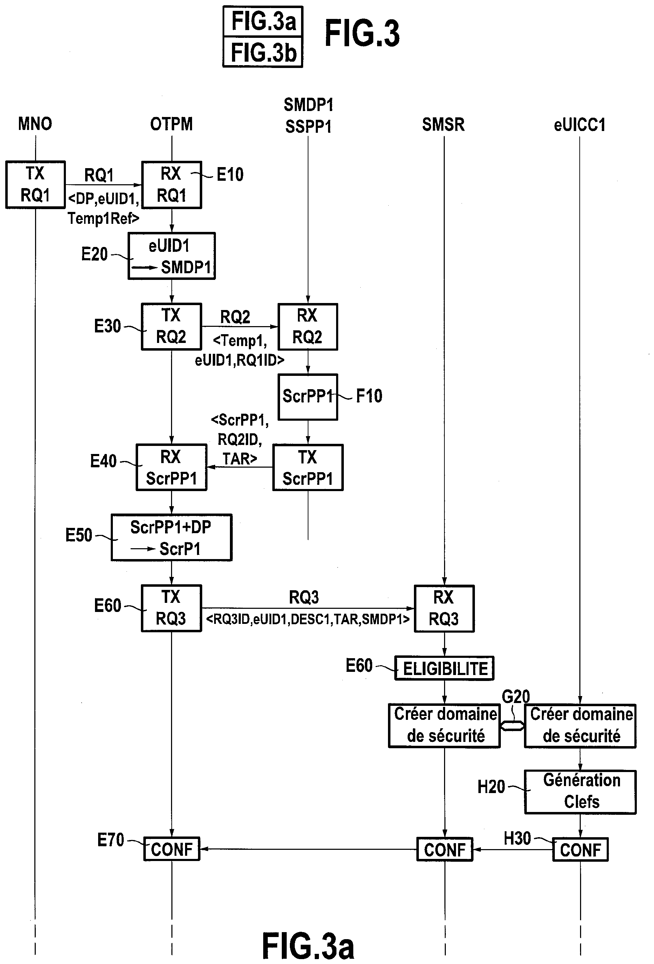

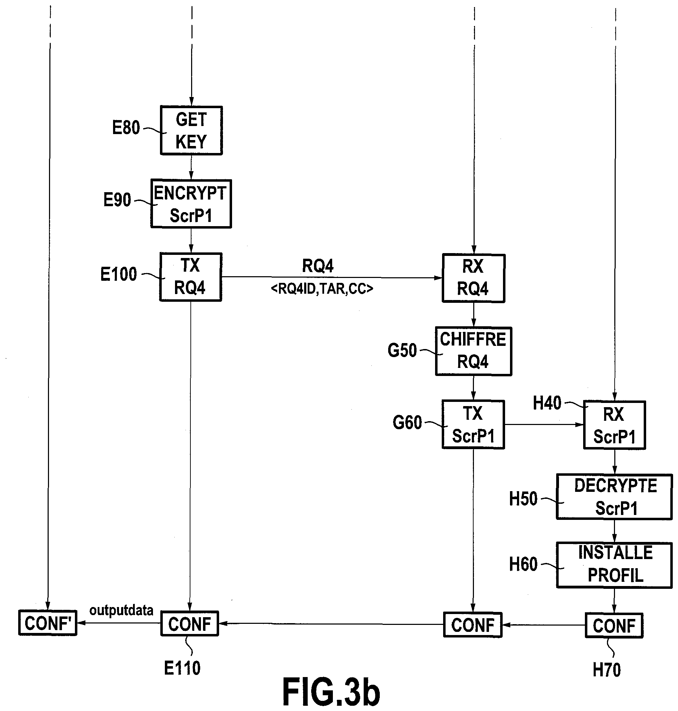

La mémoire morte de type ROM 11 constitue un support conforme à l'invention, ce support comportant un programme d'ordinateur PG apte à mettre en oeuvre un procédé de personnalisation conforme à un premier mode de réalisation de l'invention et dont les principales sont représentées sous forme d'organigramme à la figure 3.

Au cours d'une étape E10, le serveur de personnalisation OT-PM reçoit une requête de personnalisation RQ1 émise par un opérateur MNO pour télécharger un profil personnalisé conforme au modèle Temp1 dans un élément sécurisé eUICC1. Cette requête RQ1 comporte des données DP de personnalisation du profil fournies à l'Annexe 1, un identifiant eUID1 de l'élément sécurisé eUICC1 et soit le modèle de profil Temp1 soit un identifiant Temp1Ref de ce modèle de profil.

Lorsque la requête RQ1 comporte le modèle de profil lui-même, celui-ci est stocké dans la base de données 14.

Un exemple de modèle de profil Temp1 est donné à l'Annexe 2. Il s'agit dans cet exemple d'un schéma XML qui définit un fichier à écrire dans l'élément sécurisé.

Le serveur de personnalisation OT-PM et mémorise les données de personnalisation DP dans sa base de données 14 au cours de l'étape E10.

Au cours d'une étape E20, le serveur de personnalisation OTPM identifie, dans la base de données 14, le serveur de script de pré-personnalisation SSPP1 capable de générer un script de pré-personnalisation de l'élément sécurisé eUICC1, à partir de l'identifiant eUID1 de cet élément sécurisé. Dans le cas où le serveur de personnalisation OTPM est capable de générer un script de personnalisation pour une carte donnée sans besoin de se référer à un SMDP, le record pour cette carte contiendra, dans le champ SMDP, une valeur autre que l'adresse d'un serveur SMDP, un nul, par exemple.

Dans le mode de réalisation décrit ici, le serveur de script de pré-personnalisation SSPP1 est un processus du serveur de pré-personnalisation SMDP1.

Au cours d'une étape E30, le serveur de personnalisation OT-PM envoie au serveur de pré-personnalisation SMDP1, à travers un lien sécurisé, une requête RQ2 afin d'obtenir un script de pré-personnalisation SPP1 pour l'élément sécurisé eUICC1. Cette requête RQ2 comporte le modèle de profil Temp1 correspondant à l'identifiant Temp1Ref, l'identifiant eUID1 de l'élément sécurisé eUICC1, et, dans ce mode de réalisation, une référence RQ1ID de la requête RQ1 reçue de l'opérateur à l'étape E10.

Le serveur de script de pré-personnalisation SSPP1, génère, au cours d'une étape F10, un script de pré-personnalisation ScrPP1 sous forme d'un bloc de données structuré. Ce script de pré-personnalisation ScrPP1, basé sur la description du modèle de profil Temp1 comporte les commandes nécessaires à la création du profil demandé par l'opérateur MNO. Il est fourni dans cet exemple à l'Annexe 3.

Au cours d'une étape E40, le serveur de personnalisation OTPM reçoit du serveur de pré-personnalisation SPP1, dans un lien sécurisé, un message comportant le script de pré-personnalisation ScrPP1, l'identifiant RQ2ID de la requête RQ2 et une adresse de service à qui le script de pré-personnalisation doit être envoyé dans l'élément sécurisé eUICC1. Cette adresse de service peut par exemple être constituée par le Toolkit Application Reference TAR défini dans la spécification ETSI SCP 101.220. Dans le mode de réalisation décrit ici, si cette adresse de service n'est pas spécifiée, le serveur de personnalisation OTPM utilise celle définie par la norme.

Dans ce premier mode de réalisation, le serveur de personnalisation OTPM est apte à interpréter le script de pré-personnalisation ScrPP1. Au cours d'une étape E50, le serveur de personnalisation OTPM génère un script de personnalisation ScrP1 en intégrant les données de personnalisation DP dans le script de pré-personnalisation ScrPP1. Ce script de personnalisation ScrP1 est fourni à l'Annexe 4 dans cet exemple.

Au cours d'une étape E60, le serveur de personnalisation OTPM envoie au serveur SMSR de transport de profil une requête RQ3 pour que celui-ci génère un domaine sécurisé sur l'élément sécurisé eUICC1, ce domaine sécurisé étant destiné, comme de façon connue, à assurer la sécurité et la confidentialité d'un profil personnalisé chargé dans cet élément sécurisé. Dans le mode de réalisation décrit ici, la requête RQ3 comporte un identifiant RQ3ID de cette requête RQ3, l'identifiant eUID1 de l'élément sécurisé eUICC1 et une description DESC1 du profil personnalisé à charger dans le domaine sécurisé, une adresse (par exemple TAR) de destination du service dans l'élément sécurisé et l'identifiant du serveur de pré-personnalisation SMDP1.

Sur réception de cette requête RQ3, le serveur SMSR de transport vérifie, au cours d'une étape G10 dite d'éligibilité que le profil demandé peut effectivement être chargé dans l'élément sécurisé eUICC1. Cette étape d'éligibilité peut notamment consister à vérifier que la taille mémoire disponible dans l'élément sécurisé eUICC1 est suffisante pour mémoriser le profil.

Si cette éligibilité est confirmée, le serveur de transport SMSR et l'élément sécurisé eUICC1 communiquent au cours d'une étape générale G20, à travers le canal OTA pour créer un domaine de sécurité au sein de l'élément sécurisé eUICC1 conformément aux spécifications GlobalPlatform.

Au cours d'une étape H20 dite de « Key Génération », une entité de confiance de l'élément sécurisé eUICC1 créé des clefs et en assure la confidentialité, ces clefs étant destinées à être fournies comme décrit ultérieurement au serveur de personnalisation OTPM.

Au cours d'une étape H30, l'élément sécurisé eUICC1 confirme au serveur de transport SMSR la création du domaine de sécurité et la génération des clefs. Le serveur SMSR informe à son tour le serveur de personnalisation OTPM du bon déroulement de la procédure. Ce message de confirmation est reçu par le serveur de personnalisation OTPM au cours d'une étape E70.

Au cours d'une étape E80, le serveur de personnalisation OTPM exécute une procédure pour récupérer de manière confidentielle les clefs générées au sein de l'élément sécurisé eUICC1 à l'étape H20. Il stocke ces clefs dans sa base de données 14.

Au cours d'une étape E90, le serveur de personnalisation OTPM chiffre script de personnalisation ScrP1 en utilisant le jeu de clefs récupéré à l'étape E80. Ce chiffrement aussi appelé « Secure Channel » dans la norme GlobalPlatform est par exemple conforme SCP02 de cette norme. A la suite de ce chiffrement, le profil personnalisé chiffré est un script contenant une suite de commandes APDU qui seront déchiffrées et exécutées par le domaine de sécurité de l'élément sécurisé eUICC1 créé à l'étape G20.

Au cours d'une étape E100, le serveur de personnalisation OTPM envoie une requête RQ4 au serveur de transport SMSR, cette requête comportant un identifiant de requête RQ4ID, l'adresse de service TAR de l'élément sécurisé eUICC1 et une commande CC de chargement du profil personnalisé chiffré ScrP1.

Le serveur de transport SMSR authentifie le serveur de personnalisation OTPM émetteur de la requête au cours d'une étape G50, et chiffre cette requête RQ4 pour le transport de façon à ouvrir un « secure channel » au sens de la norme GlobalPlatform avec l'élément sécurisé eUICC1, par exemple suivant la méthode SCP80 ou SCP81 de la spécification GP2.2 de cette norme.

Le serveur de transport envoie le script de personnalisation chiffré ScrP1 au domaine de sécurité de l'élément sécurisé eUICC1 identifié par son adresse de service TAR à travers le canal OTA ou OTI au cours d'une étape G60.

Ce script est reçu par l'élément sécurisé au cours d'une étape H40. Au cours d'une étape H50, l'élément sécurisé retire le chiffrement de transport effectué à l'étape G50 puis transmet ce script au domaine de sécurité. Le domaine de sécurité retire alors le chiffrement effectué par le serveur de personnalisation OTPM à l'étape E90.

Le service identifié par son adresse TAR dans l'élément sécurisé eUICC1 installe le profil personnalisé en exécutant le script ScrP1 au cours d'une étape H60. Le profil installé mais pas encore actif passe alors à l'état DISABLED.

Au cours d'une étape H70, l'élément sécurisé eUICC1 retourne un acquittement au serveur de transport SMSR. Le serveur SMSR informe à son tour le serveur de personnalisation OTPM du bon déroulement de la procédure. Ce message de confirmation est reçu par le serveur de personnalisation OTPM au cours d'une étape E110.

Le serveur de personnalisation OTPM met à jour sa base de données 14 pour refléter les changements intervenus lors du téléchargement du profil du serveur MNO. Il génère ensuite un fichier « outputdata » comportant des informations utiles au serveur MNO pour activer le profil sur son réseau, notamment les clefs OTA qui lui permettront d'activer le profil lorsque celui-ci sera activé au sein de l'élément sécurisé eUICC1.

Le serveur de personnalisation OTPM confirme ensuite le bon déroulement de la procédure de téléchargement au serveur MNO.

### Première variante

Dans le premier mode de réalisation décrit précédemment, le serveur de personnalisation OTPM était apte à interpréter le script de pré-personnalisation ScrPP1 reçu à l'étape E40 et à générer, à l'étape E50, un script de personnalisation ScrP1 en intégrant les données de personnalisation dans le script de pré-personnalisation ScrPP1.

Dans une variante de réalisation de l'invention, le serveur de personnalisation OTPM ne sait pas interpréter le script de pré-personnalisation reçu du serveur SMDP1. Dans ce cas, il peut créer, au cours d'une étape E50', un script de personnalisation ScrP1' obtenu en concaténant le script de pré-personnalisation ScrPP1, sans le modifier, avec les données de personnalisation DP. On peut pour cela utiliser la technique connue de l'homme du métier sous le nom de « chained scripts » fournie représentée à l'Annexe 5.

On notera que dans l'exemple de l'Annexe 5, le script de personnalisation ScrP1' utilise deux adresses de service TAR1, TAR2.

Par conséquent, dans ce mode de réalisation, après l'étape de déchiffrement H50, l'élément sécurisé eUICC1 sépare les deux blocs au cours d'une étape H60', transmet le script de pré-personnalisation ScrPP1 à la première adresse de service TAR1 qui est en charge de l'installer. L'état du profil passe à PRE-PERSONNALIZED.

Puis, l'élément sécurisé transmet le second bloc correspondant aux données de personnalisation au service d'adresse TAR2 en charge de provisionner les données.

Les adresses de service TAR1 et TAR2 peuvent être différentes ou identiques.

### Deuxième variante

Dans le premier mode de réalisation, et dans la première variante ci-dessus, le script de pré-personnalisation ScrPP1 et les données de personnalisation DP étaient transmises par le serveur de personnalisation OTPM à l'élément sécurisé eUICC1, via le serveur de transport SMSR, en une seule requête RQ4 (étapes E100 et G60).

En variante, il est possible d'effectuer ce téléchargement en deux fois. On obtient alors le scénario suivant, après l'étape E80 de récupération des clefs par le serveur de personnalisation OTPM :
- le serveur OTPM chiffre uniquement le script de pré-personnalisation et le transmet au serveur de transport SMSR ;
- le serveur de transport SMSR rajoute un chiffrement de transport et transmet le script de pré-personnalisation à l'élément sécurisé eUICC1 ;
- le script de pré-personnalisation est reçu par l'élément sécurisé via le canal OTA/OTI, déchiffré, et installé dans le domaine de sécurité ;
- une fois confirmation reçue par le serveur de personnalisation OTPM, celui-ci chiffre le script de personnalisation et réitère le processus précédent (transmission au serveur de transport SMSR, chiffrement, transmission à l'élément sécurisé par le canal OTA/OTI, déchiffrement par l'élément sécurisé eUICC1 pour installation dans le domaine de sécurité, confirmation, envoie du fichier « outputdata » au serveur MNO.

### ANNEXE 1

```
 EF 2F00:
 content: 611E4F07A00000000101015013
```

### ANNEXE 2

```
 <scdp:DataStructure>
 <scdp:FileStructure arrayElement="EF" arrayIndex="#">
  <scdp:EF fid="2F00" sfi="30" type="LV" format="asnl.efdir"
 name="EF_DIR" content=""/>
 </scdp:FileStructure>
 </scdp:DataStructure>
```

### ANNEXE 3

```
 ISO 7816-4 command to create EF_DIR
```

### ANNEXE 4

```
 ISO 7816-4 command to create EF_DIR
 ISO 7816-4 command to write 611E4F07A00000000101015013 to EF_DIR
```

### ANNEXE 5

```
 beginning of chained script
   TAR1
    open session
      encrypted ScrPP1
    close session
   TAR2
    open session
      encrypted (ISO 7816-4 command to write 611E4F07A00000000101015013
                to EF_DIR)
    close session
 end of chained script
```

## Revendications

1. Procédé de personnalisation d'un élément sécurisé (eUICC) comportant :
- une étape (E10) de réception d'une requête de personnalisation (RQ1) émise par un opérateur (MNO) pour télécharger un profil personnalisé dans un élément sécurisé (eUICC1), ladite requête comportant des données de personnalisation (DP) et un identifiant de l'élément sécurisé (eUID1) ;
- une étape (E50) de génération d'un script (ScrP1) de personnalisation dudit élément sécurisé (eUICC1);
- une étape (E100) d'envoi du script de personnalisation à destination dudit élément sécurisé (eUICC), ledit élément sécurisé (eUICC) étant apte à exécuter ledit script de personnalisation (ScrP1) pour installer ledit profil personnalisé dans ledit élément sécurisé (eUICC1),
ledit procédé étant **caractérisé en ce que** :
- dans ladite requête de personnalisation, le profil personnalisé est conforme à un modèle de profil (Temp1), l'opérateur émettant soit ce modèle de profil, soit un identifiant (Temp1Ref) dudit modèle dans ladite requête et **en ce qu'**il comporte :
- une étape (E20) d'identification, à partir de l'identifiant de l'élément sécurisé, d'un serveur de pré-personnalisation (SSPP) apte à communiquer un script de pre-personnalisation, ledit script étant apte à pre-personnaliser ledit élément sécurisé (eUICC1);
- une étape (E40) de réception d'un message dudit serveur de pré-personnalisation (SMDP1) comportant un script (ScrPP1) de pré-personnalisation de l'élément sécurisé (eUICC1) basé sur la description dudit modèle de profil, ledit script de personnalisation étant généré en utilisant ledit script (ScrPP1) de pré-personnalisation et les données (DP) de personnalisation.

2. Procédé de personnalisation selon la revendication 1, **caractérisé en ce que** ledit serveur de pré-personnalisation (SSPP) est connecté à un serveur de personnalisation (SMDP).

3. Procédé de personnalisation selon la revendication 1 ou 2, **caractérisé en ce que** ledit script de personnalisation (ScrP1) est généré (E50) en intégrant lesdites données de personnalisation (DP) dans ledit script de pré-personnalisation (ScrPP1)

4. Procédé de personnalisation selon la revendication 1 ou 2, **caractérisé en ce que** ledit script de personnalisation (ScrP1') est généré (E50') en concaténant lesdites données de personnalisation (DP) au script de pré-personnalisation (ScrPP1) reçu dudit serveur de pré-personnalisation (SMDP1) sans modification dudit script de pré-personnalisation (ScrPP1).

5. Procédé de personnalisation selon l'une quelconque des revendications 1 à 4, **caractérisé en ce que** ledit script de pré-personnalisation et lesdites données de personnalisation dudit script de personnalisation sont envoyées à l'élément sécurisé (eUICC1) dans un même message.

6. Procédé de personnalisation selon l'une quelconque des revendications 1 à 4, **caractérisé en ce que** ledit script de pré-personnalisation et lesdites données de personnalisation dudit script de personnalisation sont envoyées à l'élément sécurisé (eUICC1) séparément, lesdites données de personnalisation étant envoyées après réception d'un message confirmant la bonne exécution du script de pré-personnalisation dans l'élément sécurisé.

7. Procédé de personnalisation selon l'une quelconque des revendications 1 à 6, **caractérisé en ce qu'**il comporte une étape (E60) d'envoi à un serveur (SMSR) de transport, d'une requête (RQ3) pour générer un domaine sécurisé sur ledit élément sécurisé (eUICC1) dans lequel ledit profil personnalisé devra être installé.

8. Procédé de personnalisation selon l'une quelconque des revendications 1 à 7, **caractérisé en ce qu'**il comporte :
- une étape (E80) d'obtention de clefs de chiffrement générées par ledit élément sécurisé (eUICC1) ; et
- une étape (E90) de chiffrement dudit script de personnalisation (ScrP1) avec lesdites clefs.

9. Procédé de personnalisation selon l'une quelconque des revendications 1 à 8, **caractérisé en ce que** ledit script de personnalisation(ScrP1) est envoyé (E100) à un serveur de transport (SMSR) apte à transmettre ledit script à l'élément sécurisé via un canal OTA (Over the Air) ou OTI (Over the Internet).

10. Serveur (OTPM) de personnalisation d'un élément sécurisé (eUICC) comportant :
- des moyens (13) de réception d'une requête de personnalisation (RQ1) émise par un opérateur (MNO) pour télécharger un profil personnalisé dans un élément sécurisé (eUICC1), ladite requête comportant des données de personnalisation (DP) et un identifiant de l'élément sécurisé (eUID1) ;
- des moyens (10) de génération d'un script (ScrP1) de personnalisation dudit élément sécurisé (eUICC1);
- des moyens (13) d'envoi du script de personnalisation (ScrPI) à destination dudit élément sécurisé (eUICC), ledit élément sécurisé (eUICC) étant apte à exécuter ledit script de personnalisation (ScrPI) pour installer ledit profil personnalisé dans ledit élément sécurisé (eUICCI),
ledit serveur étant **caractérisé en ce qu'**il comporte :
- des moyens (14) d'identification, à partir de l'identifiant de l'élément sécurisé, d'un serveur de pré-personnalisation (SMDP1) apte à pré-personnaliser ledit élément sécurisé (eUICC1);
- des moyens (13) d'interrogation dudit serveur de pré-personnalisation (SMDP1) pour obtenir un message comportant un script (ScrPP1) de pré-personnalisation de l'élément sécurisé (eUICC1) basé sur la description dudit modèle de profil, ledit script de personnalisation étant généré en utilisant ledit script (ScrP1) de pré-personnalisation et les données (DP) de personnalisation.

11. Programme d'ordinateur (PG) comportant des instructions pour l'exécution des étapes du procédé de personnalisation selon l'une quelconque des revendications 1 à 9, lorsque ledit programme est exécuté par un ordinateur (OTPM).

12. Support d'enregistrement (11) lisible par un ordinateur (OTPM) sur lequel est enregistré un programme d'ordinateur (PG) comprenant des instructions pour l'exécution des étapes du procédé de personnalisation selon l'une quelconque des revendications 1 à 9.

## Patentansprüche

1. Verfahren zur Personalisierung eines gesicherten Elements (eUICC), umfassend:
- einen Schritt (E10) des Empfangens einer durch einen Betreiber (MNO) gesendeten Personalisierungsabfrage (RQ1), um ein personalisiertes Profil in ein gesichertes Element (eUICC1) herunterzuladen, wobei die Abfrage Personalisierungsdaten (DP) und eine Kennung des gesicherten Elements (eUID1) umfasst,
- einen Schritt (E50) des Generierens eines Personalisierungsskripts (ScrP1) des gesicherten Elements (eUICC1),
- einen Schritt (E100) des Sendens des Personalisierungsskripts an das gesicherte Element (eUICC), wobei das gesicherte Element (eUICC) geeignet ist, das Personalisierungsskript (ScrP1) auszuführen, um das personalisierte Profil in dem gesicherten Element (eUICC1) zu installieren,
wobei das Verfahren **dadurch gekennzeichnet ist, dass**:
- in der Personalisierungsabfrage das personalisierte Profil entsprechend einem Profilmodell (Temp1) ist, wobei der Betreiber entweder dieses Profilmodell oder eine Kennung (Temp1Ref) des Modells in der Abfrage sendet, und dass es umfasst:
- einen Schritt (E20) der Identifikation eines Vorpersonalisierungsservers (SSPP) anhand der Kennung des gesicherten Elements, welcher geeignet ist, ein Vorpersonalisierungsskript zu übermitteln, wobei das Skript geeignet ist, das gesicherte Element (eUICC1) zu vorpersonalisieren,
- einen Schritt (E40) des Empfangs einer Nachricht von dem Vorpersonalisierungsserver (SMDP1), die ein Vorpersonalisierungsskript (ScrPP1) des gesicherten Elements (eUICC1) auf Basis der Beschreibung des Profilmodells umfasst, wobei das Personalisierungsskript unter Verwendung des Vorpersonalisierungsskripts (ScrPP1) und der Personalisierungsdaten (DP) generiert wird.

2. Personalisierungsverfahren nach Anspruch 1, **dadurch gekennzeichnet, dass** der Vorpersonalisierungsserver (SSPP) mit einem Personalisierungsserver (SMDP) verbunden ist.

3. Personalisierungsverfahren nach Anspruch 1 oder 2, **dadurch gekennzeichnet, dass** das Personalisierungsskript (ScrP1) durch Integration der Personalisierungsdaten (DP) in das Vorpersonalisierungsskript (ScrPP1) generiert wird (E50).

4. Personalisierungsverfahren nach Anspruch 1 oder 2, **dadurch gekennzeichnet, dass** das Personalisierungsskript (ScrP1') durch Verketten der Personalisierungsdaten (DP) mit dem von dem Vorpersonalisierungsserver (SMDP1) empfangenen Vorpersonalisierungsskript (ScrPP1), ohne Modifikation des Vorpersonalisierungsskripts (ScrPP1) generiert wird (E50').

5. Personalisierungsverfahren nach einem der Ansprüche 1 bis 4, **dadurch gekennzeichnet, dass** das Vorpersonalisierungsskript und die Personalisierungsdaten des Personalisierungsskripts in einer gleichen Nachricht an das gesicherte Element (eUICC1) gesendet werden.

6. Personalisierungsverfahren nach einem der Ansprüche 1 bis 4, **dadurch gekennzeichnet, dass** das Vorpersonalisierungsskript und die Personalisierungsdaten des Personalisierungsskripts an das gesicherte Element (eUICC1) getrennt gesendet werden, wobei die Personalisierungsdaten nach Empfang einer Nachricht, die das richtige Ausführen des Vorpersonalisierungsskripts in dem gesicherten Element bestätigen, gesendet werden.

7. Personalisierungsverfahren nach einem der Ansprüche 1 bis 6, **dadurch gekennzeichnet, dass** es einen Schritt (E60) des Sendens einer Abfrage (RQ3) an einen Transportserver (SMSR) umfasst, um einen gesicherten Bereich auf dem gesicherten Element (eUICC1) zu generieren, in dem das personalisierte Profil installiert werden soll.

8. Personalisierungsverfahren nach einem der Ansprüche 1 bis 7, **dadurch gekennzeichnet, dass** es umfasst:
- einen Schritt (E80) des Erhalts von kryptografischen Schlüsseln, die durch das gesicherte Element (eUICC1) generiert werden, und
- einen Schritt (E90) des Verschlüsselns des Personalisierungsskripts (ScrP1) mit den Schlüsseln.

9. Personalisierungsverfahren nach einem der Ansprüche 1 bis 8, **dadurch gekennzeichnet, dass** das Personalisierungsskript (ScrP1) an einen Transportserver (SMSR) gesendet wird (E100), der geeignet ist, das Skript an das gesicherte Element über einen OTA (Over the air)- oder OTI (Over the Internet)-Kanal zu übertragen.

10. Server (OTPM) zur Personalisierung eines gesicherten Elements (eUICC), umfassend:
- Mittel (13) zum Empfangen einer durch einen Betreiber (MNO) gesendeten Personalisierungsabfrage (RQ1), um ein personalisiertes Profil in ein gesichertes Element (eUICC1) herunterzuladen, wobei die Abfrage Personalisierungsdaten (DP) und eine Kennung des gesicherten Elements (eUID1) umfasst,
- Mittel (10) zum Generieren eines Personalisierungsskripts (ScrP1) des gesicherten Elements (eUICC1),
- Mittel (13) zum Senden des Personalisierungsskripts (ScrP1) an das gesicherte Element (eUICC), wobei das gesicherte Element (eUICC) geeignet ist, das Personalisierungsskript (ScrP1) auszuführen, um das personalisierte Profil in dem gesicherten Element (eUICC1) zu installieren,
wobei der Server **dadurch gekennzeichnet ist, dass** er umfasst:
- Mittel (14) zur Identifikation eines Vorpersonalisierungsservers (SMDP1) anhand der Kennung des gesicherten Elements, welcher geeignet ist, das gesicherte Element (eUICC1) zu vorpersonalisieren,
- Mittel (13) zum Abfragen des Vorpersonalisierungsservers (SMDP1), um eine Nachricht zu erhalten, die ein Vorpersonalisierungsskript (ScrPP1) des gesicherten Elements (eUICC1) auf Basis der Beschreibung des Profilmodells umfasst, wobei das Personalisierungsskript unter Verwendung des Vorpersonalisierungsskripts (ScrPP1) und der Personalisierungsdaten (DP) generiert wird.

11. Computerprogramm (PG), umfassend Befehle für die Durchführung der Schritte des Personalisierungsverfahrens nach einem der Ansprüche 1 bis 9, wenn das Programm durch einen Computer (OTPM) ausgeführt wird.

12. Durch einen Computer (OTPM) lesbarer Aufzeichnungsträger (11), auf dem ein Computerprogramm (PG) gespeichert ist, das Befehle für die Durchführung der Schritte des Personalisierungsverfahrens nach einem der Ansprüche 1 bis 9 umfasst.

## Claims

1. A method of personalizing a secure element (eUICC), comprising:
• a step (E10) of receiving a personalization request (RQ1) issued by an operator (MNO) to download a personalized profile into a secure element (eUICC1), said request including personalization data (DP) and an identifier of the secure element (eUID1);
• a step (E50) of generating a personalization script (ScrP1) for said secure element (eUICC1);
• a step (E100) of sending the personalization script (ScrP1) to said secure element (eUICC), said secure element (eUICC) being suitable for executing said personalization script (ScrP1) to install said personalized profile in said secure element (eUICC1),
the method being **characterized in that**:
. in said personalization request, the personalized profile is in compliance with a profile model (Temp 1), the operator issuing either this profile model (Temp 1) or an identifier (Temp1Ref) of this model in said request, and **in that** it comprises:
• a step (E20) of using the identifier of the secure element to identify a pre-personalization server (SSPP) suitable for communicating a pre-personalization script, said script being suitable for pre-personalizing said secure element (eUICC1);
• a step (E40) of receiving from said pre-personalization server (SMDP1) a message including a pre-personalization script (ScrPP1) for the secure element (eUICC1) based on the description of said profile model, the personalization script being generated using the pre-personnalization script (ScrPP1) and the personalization data (DP).

2. A personalization method according to claim 1, **characterized in that** said pre-personalization server (SSPP) is connected to a personalization server (SMDP).

3. A personalization method according to claim 1 or claim 2, **characterized in that** said personalization script (ScrP1) is generated (E50) by incorporating said personalization data (DP) in said pre-personalization script (ScrPP1).

4. A personalization method according to claim 1 or 2, **characterized in that** said personalization script (ScrP1') is generated (E50') by concatenating said personalization data (DP) and the pre-personalization script (ScrPP1) received from said pre-personalization server (SMDP1) without modifying said pre-personalization script (ScrPP1).

5. A personalization method according to any one of claims 1 to 4, **characterized in that** said pre-personalization script and said personalization data of said personalization script are sent to the secure element (eUICC1) in a single message.

6. A personalization method according to any one of claims 1 to 4, **characterized in that** said pre-personalization script and said personalization data for said personalization script are sent to the secure element (eUICC1) separately, said personalization data being sent after receiving a message confirming that the pre-personalization script has executed properly in the secure element.

7. A personalization method according to any one of claims 1 to 6, **characterized in that** it includes the step (E60) of sending a request (RQ3) to a transport server (SMSR) in order to generate a secure domain on said secure element (eUICC1) in which said personalized profile is to be installed.

8. A personalization method according to any one of claims 1 to 7, **characterized in that** it includes:
• a step (E80) of obtaining encryption keys generated by said secure element (eUICC1); and
• a step (E90) of encrypting said personalization script (ScrP1) with said keys.

9. A personalization method according to any one of claims 1 to 8, **characterized in that** said personalization script (ScrP1) is sent (E100) to a transport server (SMSR) suitable for transmitting said script to the secure element via an over the air (OTA) or an over the Internet (OTI) channel.

10. A server (OTPM) for personalizing a secure element (eUICC), the server comprising:
• means (13) for receiving a personalization request (RQ1) issued by an operator (MNO) to download a personalized profile into a secure element (eUICC1), said request including personalization data (DP) and an identifier of the secure element (eUID1);
• means (10) for generating a personalization script (ScrP1) for said secure element (eUICC1); and
• means (13) for sending the personalization script (ScrP1) to said secure element (eUICC), said secure element (eUICC) being suitable for executing said personalization script (ScrP1) to install said personalized profile in said secure element (eUICC1), said server being **characterized in that** it comprises:
• means (14) for using the identifier of the secure element to identify a pre-personalization server (SMDP1) suitable for pre-personalizing said secure element (eUICC1) ;
• means (13) for interrogating said pre-personalization server (SMDP1) in order to obtain a message including a pre-personalization script (ScrPP1) for the secure element (eUICC1) based on the description of said profile model, the personalization script being generated using the pre-personnalization script (ScrP1) and the personalization data (DP).

11. A computer program (PG) including instructions for executing steps of the personalization method according to any one of claims 1 to 9, when said program is executed by a computer (OTPM).

12. A data medium (11) that is readable by a computer (OTPM) and that stores a computer program (PG) including instructions for executing steps of the personalization method according to any one of claims 1 to 9.
